# EUROPÄISCHE PATENTSCHRIFT

(11) **EP 0 761 356 B1**
(45) Veröffentlichungstag und Bekanntmachung des Hinweises auf die Patenterteilung: **27.05.1998**
(21) Anmeldenummer: 96202320.6
(22) Anmeldetag: 20.08.1996
(51) Int. Cl.: B23D 61/18

(54) **Sägeseil**
Saw wire
Fil de sciage

(30) Priorität: 21.08.1995 AT 1408/95
(43) Veröffentlichungstag der Anmeldung: 12.03.1997
(73) Patentinhaber: Tyrolit Schleifmittelwerke Swarovski KG, 6130 Schwaz (AT)
(72) Erfinder: Egger, Franz, 6134 Vomp (AT); Zepic, Karl, 6143 Pfons (AT)

(56) Entgegenhaltungen:
- FR-A- 1 203 000
- FR-E- 74 920
- US-A- 3 741 192

## Beschreibung

Die Erfindung bezieht sich auf ein Sägeseil zum Sägen von insbesondere gesteinsartigen Werkstoffen, bestehend aus einem Tragseil und metallgebundenen, vorzugsweise Diamantschleifmittel enthaltenden Schneidperlen, wobei die Schneidperlen voneinander mittels eines in Gummi bevorzugt durch Spritzgießen eingebetteten Federelementes beabstandet sind; siehe z.B. FR-A 74 920.

Am Markt erhältlich sind Sägeseile mit verschiedenen Abstandhaltern zwischen den Schneidperlen:
Elastische gummiartige Hülsen
Schraubenfedern aus Runddraht
Kombinationen von beiden vorgenannten Merkmalen, wobei eine Schraubenfeder in gummiartiger, elastischer Masse eingebettet ist.

Die alleinige Verwendung von gummiartigen, elastischen Massen als Abstandhalter genügt nicht den anwenderseits steigenden Anforderungen gegen axiale Verschiebung der Schneidperlen entlang dem Tragseil beim Hochleistungs-Seilsägen.

Die Schraubenfeder allein als Abstandhalter erlaubt den Schneidperlen eine Drehung um das Tragseil, was nicht erwünscht ist wegen des damit verbundenen, nicht kontrollierbaren Verschleißfortschritts der Schneidbeläge.

Eine Einbettung der Feder in vomehmlich durch Spritzgießen hergestellte gummiartige Massen zielt dabei auf eine günstige Kombination der Eigenschaften beider Grundbauformen. Dabei kann die Einbettung der Feder und die Befestigung der Schneidperlen am Tragseil gleichzeitig oder getrennt erfolgen.

Bei der genannten Kombination kann auch die gelegentliche Anbringung von Quetschhülsen am Tragseil zur seilaxialen Verschiebesicherung, wie sie bei der federbeabstandeten Bauform nötig ist, entfallen. Die Umhüllung bzw. Einbettung einer Feder zwischen den Schneidperlen führt zu der sehr wichtigen Abdichtung gegen Schleifschlamm.

Aufgabe der Erfindung ist es, einen Abstandhalter anzugeben, der dem Sägeseil zu einer Verbesserung der Zerspanungsleistung, der Standzeit und der Gebrauchseigenschaften verhilft.

Diese Aufgabe wird dadurch gelöst, daß das Federelement eine aus einem Flachdraht hergestellte Schraubenfeder ist, wobei die lange Kante des Flachdrahtquerschnittes parallel zur Längsachse des Sägeseils verläuft. Eine Ausführungsform der Erfindung sieht vor, daß das Federelement an mindestens einer seiner beiden Stirnflächen mit dem Trägerkörper der anliegenden Schneidperle fest verbunden ist.

Eine bevorzugte Ausführungsform der Erfindung ist gegeben, wenn die Federelemente mit der bezüglich der Seilzugrichtung vorderen Stirnflächen der Trägerkörper der Schneidperlen fest verbunden sind.

Die bezüglich der Seilzugrichtung hintere Stirnfläche der Schneidperlen liegt dabei ohne feste Verbindung an der Stirnfläche des jeweils folgenden Federelements an. Dadurch ist leichtes Aufschieben von Einheiten bestehend aus einem Federelement und einer fest damit verbundenen Schneidperle auf dem Tragseil möglich. Dabei kann die feste Verbindung zwischen Schneidperle und Federelement beispielsweise durch Weichlöten nahezu ohne thermische Beeinflussung des Federelementes hergestellt werden.

Die Federelement-Schneidperlen-Einheiten können in einer Lötvorrichtung vor dem Aufschieben auf das Tragseil in längsaxialer, genauer Ausrichtung hergestellt werden. Die feste Verbindung zwischen Schneidperle und Federelement kann auch in an sich bekannter Weise durch Formschluß hergestellt werden, beispielsweise indem ein Federende in eine Ausnehmung der Schneidperle gesteckt wird. Die Einbettung und Aufvulkanisierung der Federelement-Schneidperlen-Einheiten auf dem Tragseil kann in an sich bekannter Weise durch Spritzgießen erfolgen.

Mit einem Sägeseil, das mit den erfindungsgemäß verbesserten Abstandhaltern ausgestattet ist, können gegenüber Sägeseilen nach dem Stand der Technik höhere axiale und tangentiale Verschiebekräfte auf das Tragseil übertragen werden durch die Vergrößerung der Kontaktfläche zwischen dem Gummikörper und den verbundenen Metallteilen und durch die besser verteilte Krafteinleitung vom Schneidbelag in das Tragseil.

Der Erfindungsgedanke bezüglich der flachen Querschnittsform des verwendeten Federdrahtes schließt Abwandlungen wie Rauten-, Elipsen-, Kreisabschnittsformen und zusammengesetzte Querschnittsformen ein. Das Wesentliche dabei ist die beabsichtigte Reduktion des Durchmessers der Abstandhalter bei mindestens gleicher Federkraft.

Die erfindungsgemäße flache Querschnittsform des Federdrahtes erlaubt eine erhebliche Reduktion des Durchmessers der Abstandhalter des Sägeseils bei mindestens gleicher Federkraft. Daraus ergibt sich gemeinsam mit der festen Verbindung zwischen Schneidperle und Federelement die Möglichkeit zur Herstellung und Anwendung von Sägeseilen geringen Durchmessers mit hoher Schnittigkeit bei ausgezeichneter Haltbarkeit. Die so erzielte Erweiterung der Anwendungsgrenze des Seilsägeverfahrens ist vorteilhaft bei schwierig zu zerspanenden, harten Werkstoffen und bei Verwendung von mobilen Seilsägemaschinen im Bauservicebereich. Dadurch sinkt der auf die Schnittfläche bezogene Energieverbrauch, die benötigte Antriebsleistung der Maschine und der auf die Schnittfläche bezogene Diamantverbrauch.

Darüberhinaus hat sich in vergleichenden Schneidversuchen mit Sägeseilen mit ausgenommen die verwendeten Federelemente gleichem Aufbau der überraschende Effekt gezeigt, daß Sägeseile mit erfindungsgemäßer Flachdrahtfeder höhere Schnittleistung in Quadratmeter pro Stunde erreichen als Sägeseile mit Standard-Runddrahtfeder.

Eine Erweiterung der Anwendungsgrenze des Seilsägeverfahrens durch die vorgeschlagene Verbesserungserfindung ergibt sich andererseits auch bei stationären Seilsägeanlagen, namentlich bei Formschnittmaschinen, die beispielsweise numerisch gesteuert Konturen aus Blöcken oder Platten herausarbeiten. Hier ist meist nicht höchste Schnittigkeit, gekennzeichnet durch die flächenbezogene Schnittleistung gefordert, sondern vorrangig ruhiger, schwingungsfreier Lauf des Sägeseils durch das Werkstück und das NC-gesteuerte Rollenführungssystem. Beim Auftreten von Sägeseilschwingungen ergeben sich Rückwirkungen auf die Schleppgenauigkeit der Steuerungsbewegungen der Maschine und auf die Oberflächengüte der Werkstücke.

Erfindungsgemäße Sägeseile sind durch die feste Verbindung zwischen Schneidperlen und Federelementen und durch die Flachform des Federdrahtes biegesteifer und damit besser geeignet als Sägeseile nach dem Stand der Technik. Sie ermöglichen einen riefenfreien geometrisch einwandfreien Schnitt in allen angesteuerten Schnittrichtungen durch Dämpfung der Schwingungsamplituden und Verlagerung der Schwingungsfrequenz in unschädliche Bereiche.

Ein Ausführungsbeispiel der Erfindung bezieht sich auf Federelemente, die an jeweils beiden zu beabstandenden Schneidperlen befestigt sind. In diesem Fall kann die feste Verbindung zwischen den Federelementen und den Schneidperlen nacheinander am Tragseil erfolgen. Es können aber auch in einer gesonderten Vorrichtung Teilstücke, bestehend aus mehreren Federelementen und Schneidperlen hergestellt werden, die danach auf das Tragseil aufgeschoben werden. Wichtig ist dabei lediglich, daß die vorgefertigten Einheiten, bestehend aus Federelementen und Schneidperlen, vor dem Verbinden mit dem Tragseil mittels der Vergußmasse unter seilaxiale Vorspannung gebracht werden.

Erfindungsgemäße Ausgestaltungen des Federelementes finden sich in den Unteransprüchen.

Nachfolgend wird die Erfindung anhand von Ausführungsbeispielen gemäß beigefügter Zeichnung weiter erläutert.

Es zeigen:
Fig. 1: Das Prinzip eines erfindungsgemäßen Sägeseils in Längsschnittdarstellung;
Fig. 2: Die zeichnerische Darstellung von Dauerstandvergleichsversuchen zwischen einem Sägeseil mit erfindungsgemäßen Abstandhaltem und einem Sägeseil nach dem Stand der Technik bei schlagender Beanspruchung in Längsrichtung des Seils;

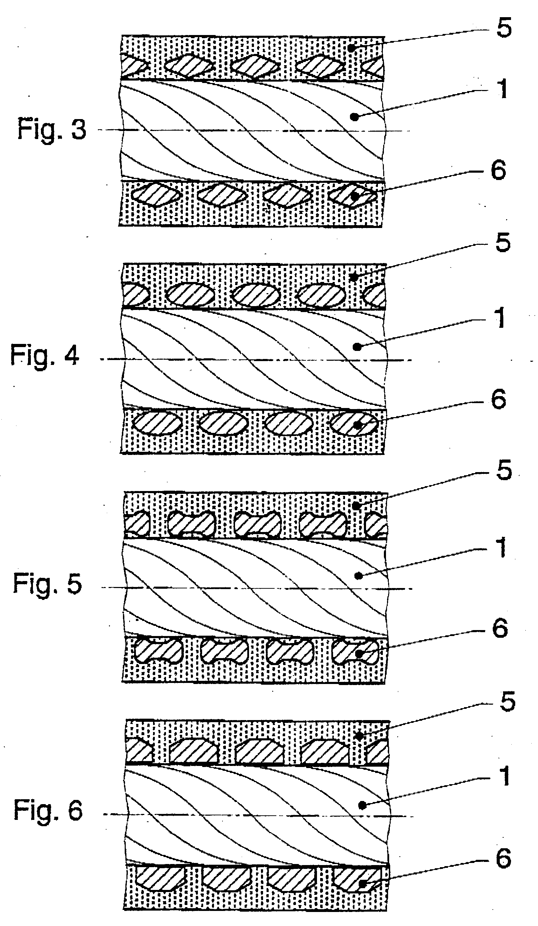

Fig. 3: Den Längsschnitt eines erfindungsgemäßen Sägeseils mit rautenförmigem Federdrahtquerschnitt im Bereich des Abstandhalters;
Fig. 4: Den Längsschnitt eines erfindungsgemäßen Sägeseils mit elipsenförmigem Federdrahtquerschnitt im Bereich des Abstandhalters;
Fig. 5: Den Längsschnitt eines erfindungsgemäßen Sägeseils mit rechteckigem Querschnitt des Federdrahtes, wobei die langen Kanten des Rechteckquerschnittes eine Einschnürung aufweisen;
Fig. 6: Den Längsschnitt eines erfindungsgemäßen Sägeseils mit angefastem, rechteckigem Federdrahtquerschnitt im Bereich des Abstandhalters.

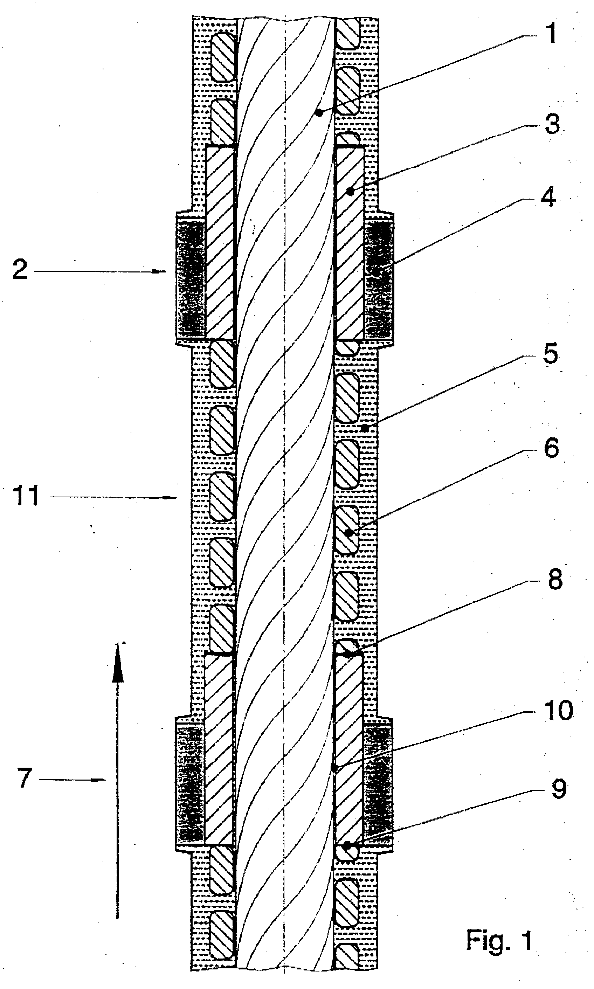

Das Sägeseil weist im erfindungsgemäßen Ausführungsbeispiel nach Fig. 1 Schneidperlen (2) mit einem Trägerkörper (3) und einem Schneidbelag (4) auf. Die Schneidperlen (2) sind in Abständen am Tragseil (1) über eine Zwischenschicht (10) befestigt, die wie an sich bekannt vorzugsweise aus derselben Vergußmasse besteht wie im Bereich des Abstandhalters (11) verwendet.

Die Abstandhalter (11) bestehen aus einem Federelement (6) und einer Vergußmasse (5). Die Federelemente (6) sind aus Flachdraht gefertigt und sind jeweils an der Stimfläche (8) durch Weichlöten an den Schneidperlen (2) befestigt. Die Stimfläche (8) ist bezüglich der Seilzugrichtung (7) jeweils an der Vorderseite der Schneidperlen (2) vorgesehen. Die Stimfläche (9) ist bezüglich der Seilzugrichtung (7) jeweils an der Rückseite der Schneidperlen (2) vorgesehen. In der Stirnfläche (9) kommen die Federelemente (6) vorzugsweise ohne feste Verbindung zur Anlage an den Schneidperlen (2). Die Federelemente (6) und die Schneidperlen (2) sind in bekannter Weise mit dem Tragseil (1) mit Vergußmasse (5) vergossen.

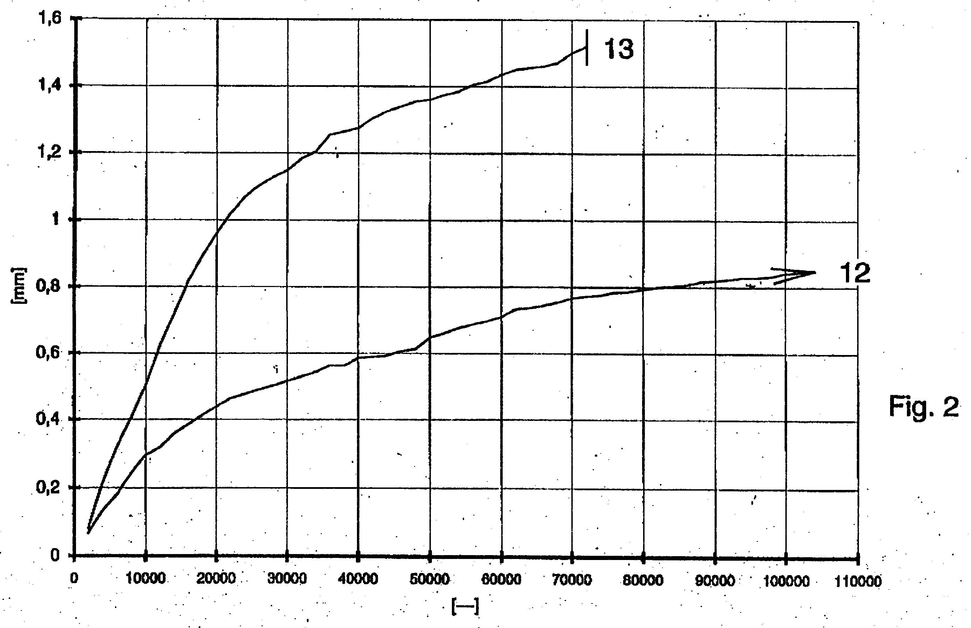

Fig. 2 zeigt ein grafisches Versuchsprotokoll eines Vergleichs des Standverhaltens eines erfindungsgemäßen Sägeseils (12) mit einem Sägesell nach dem Stand der Technik (13). Auf der Abszisse ist die Zahl der Schläge und auf die Ordinate ist der Verschiebeweg in Millimetern aufgetragen. Die Schläge wurden in einer Versuchseinrichtung hydraulisch über einen axial am Schneidbelag (4) anliegenden Ring mit einem Innendurchmesser entsprechend dem Außendurchmesser des Abstandhalters (11) in seiaxialer Richtung aufgebracht. Die Schlagkraft war dabei ähnlich dem Eintrittsstoß einer Schneidperle in das zu bearbeitende Werkstück.

Beide Versuchswerkzeuge wiesen gleiche äußere Abmessungen und gleiche Vergußmasse (5) auf. Der Abstandhalter (11) des Sägesells nach dem Stand der Technik enthielt eine lose eingelegte Schraubenfeder mit 1,25 mm Drahtdurchmesser.

### Vergleichstabelle der Federelemente:

| | **Stand der Technik** | **erfindungsgemäß** |
|---|---|---|
| Querschnittsform | 1,25 mm rund | 2,00 x 0,75 mm2 |
| Werkstoff | Federdrahtsorte B nach DIN 17223 | |
| Äußerer Federdrahtdurchmesser(mm) | 7,8 | 6,9 |
| Anzahl der Windungen | 8 | 5 |
| Federrate (N mm⁻¹) | 15,5 | 22 |
| Einbettung | Gummi | |

Der Kurvenzug (13) des Sägeseils nach dem Stand der Technik steigt steil an und endet nach 72.000 Schlägen durch Lösung der Verbindung zwischen Tragseil (1) und Schneidperle (2). Der Kurvenzug (12) des erfindungsgemäßen Sägeseils steigt flach an bis 104.000 Schläge, wobei geringerer Verschiebeweg auftrat. Nach 104.000 Schlägen wurde der Versuch beendet, es war noch keine Ablösung der Schneidperle vom Tragseil feststellbar.

### Liste der verwendeten Bezugszeichen

- 1: Tragseil
- 2: Schneidperle
- 3: Trägerkörper
- 4: Schneidbelag
- 5: Vergußmasse
- 6: Federelement
- 7: Seilzugrichtung
- 8: Stirnfläche eintrittseitig
- 9: Stirnfläche austrittseitig
- 10: Zwischenschicht
- 11: Abstandhalter
- 12: Verschiebeweg erfindungsgemäß
- 13: Verschiebeweg Stand der Technik

## Patentansprüche

1. Sägeseil zum Sägen von insbesondere gesteinsartigen Werkstoffen, bestehend aus einem Tragseil (1) und metallgebundenen, vorzugsweise Diamantschleifmittel enthaltenden Schneidperlen (2), wobei die Schneidperlen voneinander mittels eines in Gummi bevorzugt durch Spritzgießen eingebetteten Federelementes (6) beabstandet sind, gekennzeichnet dadurch, daß das Federelement (6) eine aus einem Flachdraht hergestellte Schraubenfeder ist, wobei die lange Kante des Flachdrahtquerschnittes parallel zur Längsachse des Sägeseils verläuft.

2. Sägeseil nach Anspruch 1, gekennzeichnet dadurch, daß das Federelement (6) an mindestens einer seiner beiden Stirnflächen (8, 9) mit dem Trägerkörper (3) der anliegenden Schneidperle (2) fest verbunden ist.

3. Sägeseil nach Anspruch 1 oder 2, gekennzeichnet dadurch, daß das Federelement (6) mit dem Trägerkörper (3) der Schneidperle (2) an der bezüglich des zu schneidenden Werkstücks einlaufseitigen Stirnfläche (8) der Schneidperle (2) fest verbunden ist.

4. Sägeseil nach Anspruch 1 oder 2, gekennzeichnet dadurch, daß die Federelemente (6) an der einlaufseitigen Stirnfläche (8) und an der auslaufseitigen Stirnfläche (9) mit den zu beabstandenden Schneidperlen (2) fest verbunden sind.

5. Sägeseil nach einem der vorhergehenden Ansprüche, gekennzeichnet dadurch, daß die feste Verbindung zwischen dem Federelement (6) und der Schneidperle (2) durch Löten, bevorzugt durch Weichlöten, hergestellt ist.

6. Sägeseil nach einem der Ansprüche 1 bis 4, gekennzeichnet dadurch, daß die feste Verbindung zwischen dem Federelement (6) und der Schneidperle (2) durch Schweißen hergestellt ist.

7. Sägeseil nach einem der Ansprüche 1 bis 4, gekennzeichnet dadurch, daß die feste Verbindung zwischen dem Federelement (6) und der Schneidperle (2) durch Formschluß hergestellt ist.

## Claims

1. Wire saw for the sawing of stone type materials in particular, comprising of a carrier wire (1) and metal bonded cutting beads preferably containing diamond abrasive (2), whereby the cutting beads are spaced from each other by means of spring elements (6) embedded in rubber, preferably through injection moulding, characterized in that the spring element (6) is produced from a flattened wire coil spring, whereby the long edge of the flattened wire cross-section runs parallel to the longitudinal axis of the wire saw and that the spring element (6) is securely connected on at least one of its two face sides (8, 9) with the core (3) of the adjacent cutting bead.

2. Wire saw according to claim 1, characterized in that the spring element (6) with the core (3) of the cutting bead (2) is securely connected to the running in face side (8) of the cutting bead (2) in regard to the workpiece to be cut.

3. Wire saw according to claim 1, characterized in that the spring elements (6) are securely connected to the running in face side (8) and to the running out face side (9) with the cutting beads (2) to be spaced.

4. Wire saw according to one of the preceding claims, characterized in that the secure connection between the spring element (6) and the cutting bead (2) is produced through soldering, preferably soft soldering.

5. Wire saw according to one of the claims 1 to 3, characterized in that the secure connection between the spring element (6) and the cutting bead (2) is produced through welding.

6. Wire saw according to one of the claims 1 to 3, characterized in that the secure connection between the spring element (6) and the cutting bead (2) is produced through form closure.

## Revendications

1. Cable de sciage pour scier en particulier les matériaux minéraux, composé d'un câble porteur (1) et d'une couche de coupe (2) en liaison métallique, contenant de préférence un abrasif diamanté, les éléments de la couche de coupe étant positionnés les un par rapport aux autres grâce à un élément-ressort (6) logé dans du caoutchouc, de préférence par moulage par injection, et ce câble étant caractérisé par le fait que l'élement-ressort (6) est un ressort cylindrique fabriqué à partir d'un fil métallique plat, l'arête longue de la section transversale du fil plat étant paralléle à l'axe longitudinal du câble de sciage, et que l'élément-ressort (6) est fixé sur au moins l'une de ses deux faces (8, 9) avec le support (3) de l'élément adjacent (2) de la couche de coupe.

2. Câble de sciage selon revendication 1, caractérisé par le fait que l'élément-ressort (6) est fixé avec le support (3) de l'élément de la couche de coupe (2) sur la face (8) de l'élément (2) de la couche de coupe située sur le coté d'entrée par rapport à la pièce devant être sciée.

3. Câble de sciage selon revendication 1, caractérisé par le fait que les éléments-ressort (6) sont fixés, sur la face d'entrée (8) et sur la face de sortie (9) avec les éléments de la couche de coupe (2) don't l'intervalle doit être maintenu.

4. Câble de sciage selon l'une des revendications précedentes, caractérisé par le fait que la fixation reliant l'élément-ressort (6) et l'élément de la couche de coupe (2) est réalisée par brasage, et de préférence brasage trendre.

5. Câble de sciage selon l'une des revendications 1 à 3, caractérisé par le fait que la fixation entre l'élément-ressort (6) et l'élément de la couche de coupe (2) est réalisée par soudage.

6. Câble de sciage selon l'une des revendications 1 à 3, caractérisé par le fait que la fixation entre l'élément-ressort (6) et l'élément de la couche de coupe (2) est réalisée par liaison de forme.
